# FASCICULE DE BREVET EUROPEEN

(11) **EP 4 671 677 B1**
(45) Date de publication et mention de la délivrance du brevet: **11.11.2026**
(21) Numéro de dépôt: 25181110.5
(22) Date de dépôt: 05.06.2025
(51) Int. Cl.: G01B 11/16, G01B 11/255, G01D 5/353

(54) **DISPOSITIF DE MESURE D'UN RAYON DE COURBURE**
VORRICHTUNG ZUR MESSUNG EINES BIEGERADIUS
DEVICE FOR MEASURING A RADIUS OF CURVATURE

(30) Priorité: 25.06.2024 FR 2406837
(43) Date de publication de la demande: 31.12.2025
(73) Titulaire: Commissariat à l'Energie Atomique et aux Energies Alternatives, 75015 Paris (FR)
(72) Inventeur: QUELENE, Jean-Baptiste, 91191 GIF-SUR-YVETTE CEDEX (FR); LAFFONT, Guillaume, 91191 GIF-SUR-YVETTE CEDEX (FR)
(74) Mandataire: INNOV-GROUP

(56) Documents cités:
- SUN XIAOYAN ET AL: "Simultaneous vector bending and temperature sensing based on eccentric multi-mode fiber Bragg gratings", SENSORS AND ACTUATORS A: PHYSICAL, ELSEVIER BV, NL, vol. 331, 16 June 2021 (2021-06-16), XP086798176, ISSN: 0924-4247, [retrieved on 20210616], DOI: 10.1016/J.SNA.2021.112903
- VIVEIROS DUARTE ET AL: "Femtosecond laser direct written off-axis fiber Bragg gratings for sensing applications", OPTICS AND LASER TECHNOLOGY, ELSEVIER SCIENCE PUBLISHERS BV., AMSTERDAM, NL, vol. 128, 4 April 2020 (2020-04-04), XP086150749, ISSN: 0030-3992, [retrieved on 20200404], DOI: 10.1016/J.OPTLASTEC.2020.106227

## Description

L'invention concerne un dispositif et un procédé de mesure d'un rayon de courbure.

De nombreux dispositifs connus de mesure d'un rayon de courbure utilisent un transducteur comportant une fibre optique et un réseau de Bragg réalisé dans cette fibre optique. Ces dispositifs connus présentent de nombreux avantages comme, par exemple, l'insensibilité du transducteur aux perturbations électromagnétiques.

L'article suivant divulgue un tel dispositif de mesure : Zhao, Y. et Al : "Simultaneous directional curvature and temperature sensor based on a tilted few-mode fiber Bragg grating" Applied Optic, AO 57(7), pages 1671-1678, 01/03/2018. Par la suite, cet article est désigné par la référence «Zhao2018 ».

Les articles suivants divulguent également de tel dispositif de mesure :
- SUN XIOYAN et Al : « Simultaneous vector bending and temperature sensing based on eccentric multi-mode fiber Bragg gratings », Sensors and actuators A : Physical, Elsevier BV, NL, vol. 331, 2021-06-16,
- Vivieros Duarte et Al : « Femtosecond laser direct written off-axis fiber Bragg grating for sensing applications », Optics and laser technology, Elsevier Science Publishers BV, NL, vol. 128, 2020-04-04.

Le dispositif de mesure divulgué dans Zhao2018 établit le rayon de courbure à partir de l'amplitude d'un pic de puissance d'une réponse spectrale du réseau de Bragg dans un groupe de modes spatiaux interrogé différent du groupe du mode spatial fondamental. Ceci est intéressant car l'amplitude de ce pic de puissance varie en fonction du rayon de courbure de la fibre optique mais ne varie pas ou très peu en fonction de la température. Ainsi, la mesure du rayon de courbure à l'aide de ce dispositif de mesure est peu sensible aux variations de température.

Toutefois, pour réaliser le dispositif de mesure divulgué dans Zhao2018, il faut utiliser une fibre optique multimode particulière connue sous l'acronyme FMF (« Few Mode Fiber »). De plus, il faut utiliser un type particulier de réseau de Bragg, à savoir un réseau de Bragg incliné connu sous l'acronyme TFBG (« Tilted Fiber Bragg Grating »). Comme enseigné dans l'article suivant, un réseau de Bragg incliné modifie l'intensité de la lumière transmise par l'intermédiaire de la gaine optique en fonction du rayon de courbure : Jang, M., Kim et Al : "Ultra-high curvature sensors for multi-bend structures using fiber Bragg gratings," Optics Express, Vol. 27, n° 3, pages 2074-2084, 4/02/2019. Ainsi, lorsqu'un réseau de Bragg incliné est utilisé pour mesurer un rayon de courbure, il faut exciter ce réseau de Bragg incliné en émettant un signal optique d'excitation dans une extrémité de la fibre optique et mesurer le signal optique qui varie en fonction du rayon de courbure au niveau de l'extrémité opposée de cette fibre optique.

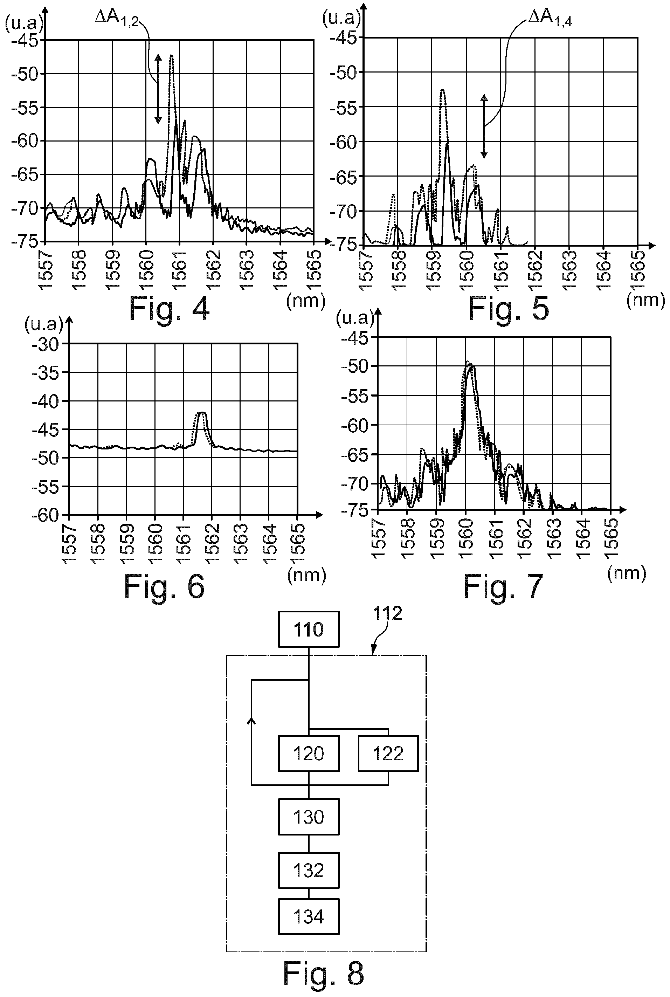

A cause des différentes contraintes exposées au paragraphe précédent, la mise en œuvre du dispositif de mesure décrit dans Zhao2018 est assez complexe, notamment pour les raisons suivantes :
1) Il faut mesurer le spectre en transmission du réseau de Bragg ce qui impose d'émettre le signal d'excitation depuis une extrémité de la fibre optique et de réaliser la mesure à partir de l'autre extrémité de la fibre.
2) Il est supposé que les quatre premières bandes absorbées (« core modes ») sur la figure 7 de Zhao2018 correspondent aux couplages du mode fondamental LP01 vers les quatre modes LP guidés (LP01, LP11, LP21, LP02). En pratique, pour obtenir un tel résultat, il faut injecter uniquement le mode LP01 ce qui nécessite un montage particulier et plus complexe sans démultiplexeur modal. D'autres modes injectés dans la fibre pourraient produire d'autres bandes absorbées correspondant aux couplages depuis ces modes vers tous les modes guidés de la fibre et qui pourraient se superposer aux bandes d'absorption d'intérêt, rendant la mesure plus complexe.
3) Les bandes d'absorption observées seront plus nombreuses pour une fibre contenant plus de groupes de mode. Il sera donc plus difficile de séparer les pics pour une fibre à nombre de mode plus élevé.

L'invention vise à remédier à cet inconvénient en proposant un dispositif de mesure d'un rayon de courbure plus simple à mettre en œuvre.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- la figure 1 est une illustration schématique d'une section transversale d'un transducteur optique,
- la figure 2 est une illustration schématique d'un réseau de Bragg du transducteur de la figure 1,
- la figure 3 est une illustration schématique d'un premier mode de réalisation d'un dispositif de mesure à l'aide du transducteur de la figure 1,
- les figures 4 à 7 sont des graphes illustrant différentes réponses spectrales du transducteur de la figure 1,
- la figure 8 est un organigramme d'un procédé de mesure à l'aide du dispositif de la figure 3,
- les figures 9 et 10 sont des illustrations schématiques, respectivement, d'un deuxième et d'un troisième mode de réalisation d'un dispositif de mesure à l'aide du transducteur de la figure 1,
- la figure 11 est un graphe illustrant des réponses spectrales mesurée à l'aide du dispositif de la figure 10,
- les figures 12 et 13 sont des illustrations schématiques, en coupes transversales, de deux autres modes de réalisation du transducteur de la figure 1.

Dans cette description, la terminologie, les conventions et les définitions des termes utilisés dans ce texte sont introduites dans un chapitre I. Ensuite, des exemples détaillés de modes de réalisation sont décrits dans un chapitre II en référence aux figures. Dans un chapitre III, des variantes de ces modes de réalisation sont présentées. Enfin, les avantages des différents modes de réalisation sont précisés dans un chapitre IV.

### Chapitre I : Définitions, terminologies et conventions :

Dans les figures, les mêmes références sont utilisées pour désigner les mêmes éléments.

Dans la suite de cette description, les caractéristiques et fonctions bien connues de l'homme du métier ne sont pas décrites en détails.

Le symbole « * » désigne l'opération de multiplication scalaire.

Le domaine de l'optique désigne la plage contenant les longueurs d'onde habituellement utilisées en optique. Plus précisément, dans ce texte, le domaine de l'optique désigne la plage qui s'étend de 200 nm à 10000 nm et, fréquemment, de 200 nm à 5000 nm ou de 400 nm à 2000 nm.

Un groupe de modes spatiaux d'une fibre optique multimode est un groupe de modes spatiaux qui contient tous les modes spatiaux qui ont des constantes de propagation identiques ou quasiment identiques. Ainsi un mode de ce groupe peut se coupler très fortement à un autre mode du même groupe dès qu'il existe une très petite imperfection sur le trajet optique. A titre d'exemple, une très petite imperfection sur le trajet optique peut être une asymétrie du cœur de la fibre optique. Ces modes spatiaux qui peuvent se coupler très fortement ensemble sont aussi connus sous le terme de « modes dégénérés ». Ainsi, un groupe de modes spatiaux contient tous les modes qui ont le même indice effectif de propagation ou quasiment le même indice effectif de propagation. Les groupes de modes spatiaux varient en fonction des caractéristiques de la fibre optique multimode telles que sa géométrie et la variation de son indice de réfraction dans une direction transversale. La direction transversale est une direction qui est perpendiculaire à l'axe central de la fibre optique. Par exemple, les groupes de modes spatiaux ne sont pas les mêmes pour une fibre optique multimode à saut d'indice (« step index multimodal optical fiber » en anglais) et pour une fibre optique multimode dont l'indice de réfraction varie continûment le long d'une direction transversale (fibre à gradient d'indice).

Par la suite, l'expression « groupe de modes » désigne un groupe de modes spatiaux.

Le mot « mode » désigne un « mode spatial ». Chaque mode est décomposable en deux modes de polarisation orthogonales. Par la suite, sauf information contraire, le mot « mode » est utilisé pour désigner les deux polarisations orthogonales de ce mode. Ainsi, par exemple, lorsqu'il est indiqué qu'un mode est excité, à défaut d'information contraire, cela signifie que les deux modes de polarisation orthogonales sont simultanément excités.

Le mode correspondant à l'indice effectif le plus élevé est appelé mode fondamental. Le groupe de modes qui contient le mode fondamental ne comporte généralement que les deux modes fondamentaux de polarisations orthogonales. Ce groupe de modes qui comporte le mode fondamental est appelé « groupe du mode fondamental ».

Un groupe de modes excité est un groupe de modes dans lequel est transmis un signal optique d'excitation. Un groupe de modes est excité à partir du moment où au moins un mode de ce groupe est excité.

Un groupe de modes interrogé est un groupe de modes dans lequel la réponse spectrale d'un réseau de Bragg est mesurée. Un groupe de modes est interrogé à partir du moment où au moins un mode de ce groupe est interrogé, c'est-à-dire à partir du moment où la réponse spectrale de ce groupe est mesurée à partir d'un signal optique qui se propage dans au moins un mode de ce groupe.

L'indice effectif nₑ de propagation est aussi connu sous le nom de « constante de phase du mode ». Il est défini par la relation suivante : β = nₑ*2*π/λ, où β est la constante de phase et λ est la longueur d'onde du signal optique dans le vide. L'indice effectif de propagation d'une fibre optique dépend des dimensions du cœur de cette fibre optique et des matériaux formant ce cœur et la gaine optique de cette fibre optique. Il peut être déterminé expérimentalement ou par simulation numérique.

Dans ce texte, une réponse spectrale d'un groupe est un spectre de puissance d'un réseau de Bragg mesuré uniquement à partir de signaux optiques qui se propagent dans ce groupe particulier de modes d'une fibre optique multimode dans laquelle est réalisé ce réseau de Bragg. Ainsi, pour un analyseur spectral donné, un même réseau de Bragg présente autant de réponses spectrales d'un groupe qu'il y a de groupes de modes possibles dans la fibre optique multimode. Lorsqu'un groupe de modes comporte plusieurs modes, la réponse spectrale de ce groupe de modes peut être obtenue :
- uniquement à partir du signal optique qui se propage dans un seul des modes de ce groupe de modes, ou
- à partir des signaux optiques qui se propagent dans plusieurs des modes de ce groupe de modes.

Une « réponse spectrale d'un mode » ou « une réponse spectrale dans un mode » est un spectre de puissance du réseau de Bragg mesuré en utilisant uniquement les signaux optiques qui se propagent dans ce mode particulier. Cette réponse spectrale d'un mode peut être considérée à elle seule comme étant représentative de la réponse spectrale du groupe contenant ce mode particulier. Dans ce cas, la réponse spectrale dans ce groupe peut être considérée comme étant identique à la réponse spectrale de ce mode particulier de ce groupe.

Dans ce texte, l'expression « une réponse spectrale dans un groupe » désigne à la fois la réponse spectrale de ce groupe et la réponse spectrale d'un mode de ce groupe.

Typiquement, la réponse spectrale d'un groupe particulier d'un réseau de Bragg comporte, dans une plage de travail prédéterminée, un seul pic dont la puissance peut être maximale. Par la suite, ce pic de puissance maximale est appelé « pic principal »

Dans ce texte, à défaut d'indication contraire, le terme « spectre de puissance » ou « spectre » désigne le spectre de puissance en réflexion. Le spectre de puissance en réflexion est le spectre de puissance du signal optique réfléchi par un composant optique. Un pic dans le spectre de puissance en réflexion correspond à une raie d'absorption dans le spectre de puissance en transmission du même composant optique.

Un réseau de Bragg est sensible à une grandeur physique lorsqu'une variation de cette grandeur physique entraîne une modification correspondante d'une réponse spectrale de ce réseau de Bragg. Cette modification peut être une modification de l'amplitude d'un pic de puissance dans cette réponse spectrale et/ou une modification de la position de ce pic de puissance dans la réponse spectrale.

Un coefficient S_{i,j} de sensibilité d'un réseau de Bragg à une grandeur physique est une constante définie par la relation suivante ΔA_{i,j} = S_{i,j}*ΔG, où :
- ΔA_{i,j} est la variation de l'amplitude du pic de puissance dans une réponse spectrale d'un groupe j du réseau de Bragg i obtenue en réponse à une variation ΔG de la grandeur physique à mesurer,
- i est un indice qui identifie le réseau de Bragg utilisé pour mesurer la variation ΔA_{i,j}, et
- j est un indice qui identifie le groupe de modes pour lequel la réponse spectrale du groupe a été mesurée.

La variation ΔA_{i,j} est égale à l'écart A_{i,j} - A_{i,j,ref}, où :
- A_{i,j} est l'amplitude du pic de puissance mesurée dans la réponse spectrale du groupe j de modes, et
- A_{i,j,ref} est une amplitude de référence prédéterminée et constante.
Contrairement à l'amplitude A_{i,j,ref}, l'amplitude A_{i,j} varie en fonction de la grandeur physique à mesurer.

Le terme « plan de courbure » désigne le plan qui contient le cercle osculateur dont le rayon de courbure est mesuré. Ce plan contient donc la portion de l'axe central de la fibre optique qui est courbé et dont le rayon de courbure doit être mesuré.

La plus grande dimension transversale d'un motif d'un réseau de Bragg est égale à la longueur du plus grand côté du rectangle, de plus petite surface, qui contient entièrement la projection orthogonale du motif dans un plan passant par ce motif et perpendiculaire à l'axe longitudinal du réseau de Bragg. Ainsi, dans le cas où le motif est une bulle sensiblement ellipsoïdale, la plus grande dimension transversale de ce motif est proche ou égale au diamètre de la sphère, de plus petit volume, qui contient entièrement cette bulle sensiblement sphérique.

### Chapitre II : Exemples de mode de réalisation

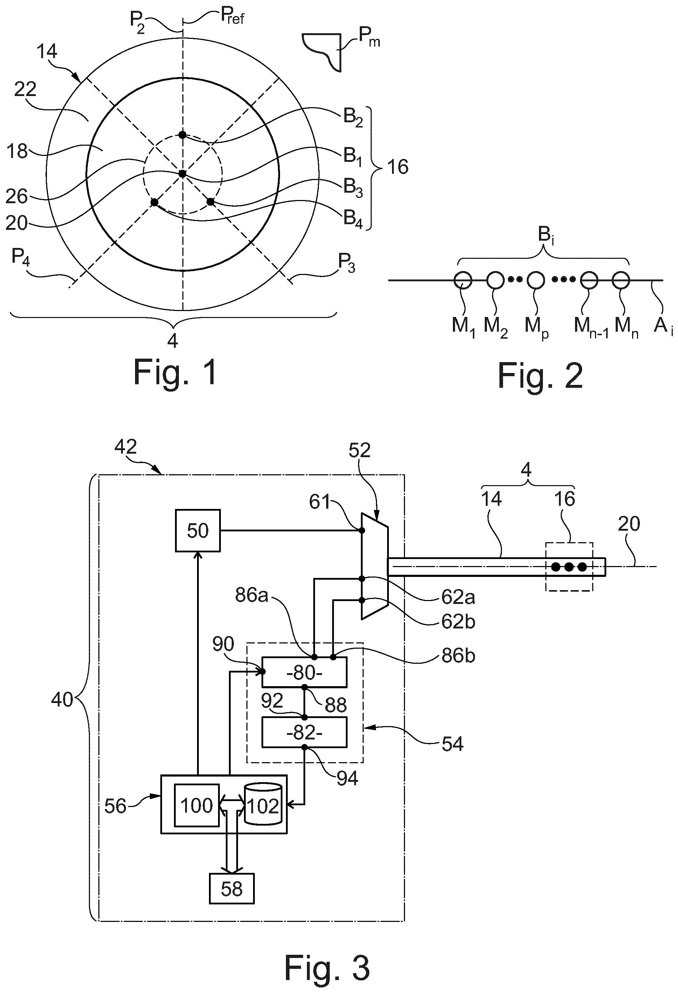

La figure 1 représente une section transversale d'un transducteur optique 4 dans un plan médian Pm. Le transducteur 4 est capable de transformer une variation de son rayon de courbure à mesurer en des variations des amplitudes de pics de puissance dans des réponses spectrales mesurées sur une plage de travail. Cette plage de travail a une largeur supérieure à 5 nm ou 10 nm. Typiquement, sa largeur est également inférieure ou égale à 200 nm ou 120 nm. Ici, la largeur de la plage de travail est égale à 100 nm.

Le transducteur 4 comporte à cet effet une fibre optique multimode 14 et un ensemble 16 de réseaux de Bragg.

La fibre 14 contient un cœur 18 qui s'étend le long d'un axe central 20. Les signaux optiques guidés par cette fibre 14 se propagent à l'intérieur du cœur 18 le long de l'axe 20. Le cœur 18 est centré sur l'axe 20. Ici, la section transversale du cœur 18 visible sur la figure 1 est un disque de diamètre D₁₈. Le diamètre D₁₈ est généralement supérieur à 25 µm ou 50 µm et inférieur à 200 µm ou 100 µm. Ce cœur 18 est entouré d'une gaine 22 d'indice de réfraction différent pour guider les signaux optiques le long de l'axe 20. Le diamètre extérieur D₂₂ de la gaine 22 est souvent supérieur à 100 µm. Par exemple, le diamètre D₂₂ est égal à 125 µm. La gaine 22 peut elle-même être entourée d'une ou plusieurs enveloppes de protections mécaniques, thermiques et chimiques.

La fibre 14 est conformée pour autoriser la propagation des signaux optiques le long de l'axe 20 selon le groupe du mode fondamental et selon au moins un autre groupe de modes différent. Typiquement, le nombre de groupes de modes différents peut être supérieur à trois ou cinq ou dix.

Dans ce mode de réalisation, l'ensemble 16 comporte un réseau de Bragg central B₁ et trois réseaux de Bragg excentrés B₂ à B₄. Chacun de ces réseaux de Bragg est réalisé dans le cœur 18 et comporte au moins trois motifs identiques alignés les uns derrières les autres le long d'un axe longitudinal parallèle à l'axe 20. Ici les réseaux de Bragg de l'ensemble 16 sont structurellement identiques les uns aux autres sauf que leurs pas Λᵢ sont différents. Ainsi, seul la structure du réseau Bᵢ est représentée plus en détail sur la figure 2, où l'indice i est un indice identifiant le réseau Bᵢ parmi les différents réseaux de Bragg de l'ensemble 16. Ici, l'indice i est un nombre entier compris entre 1 et 4.

Le réseau Bᵢ est composé d'une succession de motifs Mₚ disposés les uns derrière les autres le long d'un axe longitudinal Aᵢ. L'axe Aᵢ est parallèle ou confondu avec l'axe 20. Chaque motif Mₚ est centré sur l'axe Aᵢ. L'indice p est le numéro d'ordre du motif le long de l'axe Aᵢ. L'indice p du premier motif le plus à gauche dans le réseau Bᵢ est égal à 1 et l'indice p du dernier motif le plus à droite dans le réseau Bᵢ est égal à n. n est égal au nombre de motifs Mₚ du réseau Bᵢ. Sur la figure 2, seuls les deux premiers motifs, un motif Mₚ et les deux derniers motifs du réseau Bᵢ ont été représentés. La présence des motifs intermédiaires situés entre les motifs M₂ et Mₚ et entre les motifs Mₚ et Mₙ₋₁ est représentée par des points noirs sur l'axe Aᵢ.

Le nombre n de motifs est supérieur ou égal à trois et, de préférence, supérieur ou égal à dix. Ici, le nombre n est aussi choisi suffisamment petit pour que la longueur du réseau Bᵢ reste petite, c'est-à-dire inférieure à 1 mètre et, de préférence, inférieure à 10 cm ou 1 cm. La longueur du réseau Bᵢ est égale à la distance entre les motifs M₁ et Mₙ mesurée le long de l'axe Aᵢ. Typiquement, le nombre n est telle que le nombre de motifs par millimètre reste inférieur à 500 ou 1000.

Ici, le pas Λᵢ entre deux motifs Mₚ et Mₚ₊₁ immédiatement consécutifs le long de l'axe Aᵢ est constant quel que soit l'indice p. Le pas Λᵢ est donc égal à la distance, le long de l'axe Aᵢ, qui sépare deux motifs Mₚ et Mₚ₊₁ immédiatement consécutifs.

Ici, le pas Λᵢ est choisi pour que la longueur d'onde λ_{i,j} du réseau Bᵢ, dans le groupe j de modes interrogé, soit comprise dans la plage de travail, où l'indice j est un nombre entier qui identifie le groupe de modes interrogé. Le pas Λᵢ est aussi choisi pour que la longueur d'onde λ_{i,j} du réseau Bᵢ soit suffisamment différente des longueurs d'onde λ_{k,j}, dans le même groupe de modes interrogé j, des autres réseaux de Bragg de l'ensemble 16, où l'indice k est différent de l'indice i. Ainsi, les réponses spectrales des différents réseaux Bᵢ peuvent être isolées les unes des autres.

Dans le cas d'une fibre optique multimode, le réseau Bᵢ présente une longueur d'onde λ_{i,j} pour chaque groupe de modes j interrogé de la fibre 14. La longueur d'onde λ_{i,j} du réseau Bᵢ dans le groupe j de modes interrogé est donnée par la relation (1) suivante : λ_{i,j} = 2*n_{ei,j}*Λᵢ/mᵢ, où :
- λ_{i,j} est la longueur d'onde du réseau Bᵢ pour le groupe j de modes interrogé,
- n_{ei,j} est l'indice effectif du groupe j de modes, et
- Λᵢ est le pas du réseau Bᵢ
- mᵢ est l'ordre du réseau de Bragg.

Dans les modes de réalisation décrits ici, l'ordre mᵢ est inférieur à dix et, par exemple, égal à un.

Étant donné que l'indice effectif n_{ei,j} varie en fonction du groupe de modes, il existe autant de longueurs d'onde λ_{i,j} qu'il y a de groupes de modes possibles dans la fibre 14 pour un montage d'interrogation donné.

Les motifs Mₚ du réseau Bᵢ sont tous identiques les uns aux autres. Ici, le motif Mₚ est constitué d'une unique bulle principalement sphérique. Ainsi, le diamètre de cette bulle est égal au diamètre de la sphère de plus petit volume qui contient entièrement cette bulle.

Chaque bulle crée une variation importante de l'indice de réfraction du cœur 18 dans la direction de propagation du signal optique. Pour cela, l'écart entre l'indice nᵣ₁₈ de réfraction du cœur 18 et l'indice n_{rB} de réfraction de la bulle est supérieur à 0,3 ou à 0,4. Ici, l'intérieur de chaque bulle est vide ou pratiquement vide ce qui correspond à un écart entre les indices nᵣ₁₈ et n_{rB} supérieur ou égal à 0,4.

Ici, chaque bulle est réalisée à l'aide d'une impulsion d'un laser Femtoseconde. Dans ce mode de réalisation, les caractéristiques de l'impulsion du laser Femtoseconde sont ajustées pour que le diamètre de chaque bullesoit inférieur à 1000 nm ou 500 nm ou 100 nm. Généralement, le diamètre de chaque bulle est également supérieur à 10 nm ou 50 nm. Ainsi, dans ce mode de réalisation, la plus grande dimension transversale de chaque motif Mₚ est inférieure à 1000 nm ou 500 nm ou 100 nm.

Les réseaux Bᵢ sont situés au même endroit le long de la fibre 14. Pour cela, par exemple, tous les réseaux Bᵢ s'étendent de part et d'autre d'un même plan médian Pₘ perpendiculaire à l'axe 20. De préférence, les réseaux Bᵢ sont centrés sur ce plan médian Pₘ, c'est-à-dire que le plan Pₘ divise chaque réseau Bᵢ en deux portions de même longueur.

Le réseau B₁ est dit « central » car son axe A₁ est confondu avec l'axe 20. A l'inverse les réseaux B₂ à B₄ sont dits « excentrés » car leurs axes A₂ à A₄ sont excentrés par rapport à l'axe 20.

Les réseaux de Bragg excentrés de l'ensemble 16 sont contenus dans Nₚₛ plans sécants, où Nₚₛ est un nombre entier supérieur ou égal à deux. Tous les plans sécants se coupent les uns avec les autres le long de l'axe 20. Dans ce mode de réalisation, il existe trois plans sécants P₂, P₃ et P₄ qui contiennent, respectivement, les réseaux B₂, B₃ et B₄.

De préférence, l'angle, exprimé en degrés, entre deux plans sécants consécutifs autour de l'axe 20 est compris entre 0,9*360/(2*Nₚₛ)° et 1,1*360/(2*Nₚₛ)° ou entre 0,95*360/(2*Nₚₛ)° et 1,05*360/(2*Nₚₛ)° et avantageusement égal à 360/(2*Nₚₛ)°. Ainsi, dans cet exemple, l'angle entre deux plans sécants consécutifs est égal à 60°.

Ici, les axes A₂ à A₄ des réseaux B₂ à B₄ sont uniformément répartis sur la périphérie d'un cylindre 26 de révolution centré sur l'axe 20. Ainsi, les axes A₂ à A₄ sont situés à la même distance de l'axe 20. La distance entre chacun des axes A₂ à A₄ et l'axe 20 est suffisamment grande pour que les motifs Mₚ des réseaux Bᵢ de l'ensemble 16 soient disjoints. A cet effet, la distance entre chacun des axes A₂ à A₄ et l'axe 20 est supérieur au diamètre des bulles qui forment chacun des motifs Mₚ.

La figure 3 représente un dispositif 40 de mesure d'un rayon de courbure et de l'orientation du plan de courbure par rapport à un plan P_{ref} de référence. Par la suite, le plan P_{ref} est le plan confondu avec le plan P₂ lorsque l'axe 20 est rectiligne et donc en absence de courbure de la fibre 14. L'orientation du plan de courbure correspond donc à l'angle entre le plan de courbure et le plan P_{ref}.

A cet effet, le dispositif 2 comporte le transducteur 4 et un analyseur spectral 42. L'analyseur spectral 42 est capable de mesurer des réponses spectrales du transducteur 4 puis d'établir le rayon de courbure et l'orientation du plan de courbure de la fibre 14 à l'emplacement de l'ensemble 16 à partir de ces réponses spectrales mesurées. Pour cela, l'analyseur spectral 42 est optiquement raccordé à une extrémité proximale de la fibre 14. L'autre extrémité de la fibre 14, dite « distale », est libre.

Par la suite, l'analyseur 42 est décrit dans le cas particulier où seul le groupe j de modes de la fibre 14 est interrogé. Le groupe j est différent du groupe du mode fondamental. Le groupe j est choisi parmi les groupes de modes de la fibre 14 dans lesquels la réponse spectrale des réseaux Bᵢ présente un pic de puissance dont l'amplitude varie en fonction du rayon de courbure à mesurer. Parmi plusieurs pics de la réponse spectrale d'un groupe d'un réseau Bᵢ, le pic dont l'amplitude varie le plus en réponse à une variation du rayon de courbure est appelé « pic principal ». Il est souligné que la réponse spectrale d'un groupe des réseaux Bᵢ présente un pic de puissance dont l'amplitude varie en fonction du rayon de courbure uniquement dans certains groupes de modes de la fibre 14 dits « pairs ». A l'inverse, les groupes de modes de la fibre 14 dans lesquels la réponse spectrale des réseaux Bᵢ ne comporte pas de pic de puissance dont l'amplitude varie en fonction du rayon de courbure sont dits « impairs ». Le groupe du mode fondamental est l'un de ces groupes de modes impairs.

Ceci est illustré sur les graphes des figures 4 à 7. Les graphes des figures 4 à 7 représentent les réponses spectrales du réseau B₁ mesurées à partir des signaux optiques réfléchis par ce réseau B₁ dans les groupes de modes, respectivement, 2, 4, 1 et 3. Le groupe 1 correspond au groupe du mode fondamental. Les groupes 2 et 4 sont les deux premiers groupes pairs. Le groupe 3 est le second groupe impair. Sur ces graphes, l'axe des abscisses correspond à la longueur d'onde et l'axe des ordonnées représente la puissance du signal optique réfléchi par le réseau B₁. Dans chacun de ces graphes la ligne en trait plein représente la réponse spectrale du groupe mesurée en absence de courbure de la fibre 14 et la ligne en pointillée représente la même réponse spectrale mais mesurée en présence d'un rayon de courbure de 1 cm. Comme visible sur les graphes des figures 4 et 5, l'amplitude du pic principal dans les réponses spectrales des groupes 2 et 4 varie de façon importante en réponse à une courbure de la fibre 14. A l'inverse, comme visible sur les graphes des figures 6 et 7, l'amplitude du pic principal dans les réponses spectrales mesurées dans les groupes 1 et 3 ne varie pratiquement pas en réponse à cette même courbure de la fibre 14.

Ce phénomène est expliqué par le fait que la répartition transversale, c'est-à-dire dans une section transversale du cœur 18, de la puissance des signaux optiques qui se propagent dans un groupe de modes est symétrique par rapport à un centre de symétrie. Dans le cas des groupes de modes pairs, la puissance des signaux optiques est nulle au niveau de ce centre de symétrie. Lorsque l'axe 20 est rectiligne, le centre de symétrie de ces répartitions transversales de puissance est situé sur l'axe 20. Ainsi, en absence de courbure de la fibre 14, les signaux optiques qui se propagent dans les groupes de modes pairs n'interagissent pas avec le réseau B₁ dont l'axe A₁ est confondu avec l'axe 20. C'est pour cela que dans les graphes des figures 4 et 5, en absence de courbure de la fibre 14, l'amplitude du pic principal est minimale. Par contre, quand la fibre 14 est courbée, le centre de symétrie des répartitions transversales de puissance des groupes de modes pairs se décale par rapport à l'axe 20. La puissance des signaux optiques qui se propagent dans ces groupes de modes pairs n'est alors plus nulle au niveau de l'axe 20. Ils interagissent donc avec le réseau B₁, ce qui explique que l'amplitude du pic principal dans les graphes des figures 4 et 5 augmente quand la fibre 14 est courbée.

A l'inverse, les réseaux B₂ à B₄ sont situés dans des zones de la répartition transversale de puissance des groupes de modes pairs où la puissance des signaux optiques est importante lorsque l'axe 20 est rectiligne. Lorsque la fibre 14 est courbée, le centre de symétrie des répartitions transversales de puissance des groupes de modes pairs, se rapproche de l'un des réseaux B₂ à B₄. En réponse, l'amplitude du pic principal dans la réponse spectrale du groupe de modes pairs de ce réseau diminue. Ainsi, il a été observé que, dans le cas des réseaux B₂ à B₄, le fonctionnement est l'inverse de celui observé pour le réseau B₁, c'est-à-dire qu'une courbure de la fibre 14 provoque une diminution de l'amplitude du pic principal d'au moins un des réseaux B₂ à B₄.

Ici, le groupe de modes interrogé est le groupe de modes pair pour lequel, en réponse à une variation donnée du rayon de courbure, la variation de l'amplitude du pic principal est la plus grande.

Le groupe de modes interrogé contient plusieurs modes. Pour simplifier les figures et les explications, la description qui suit est faite dans le cas où seuls deux modes du groupe de modes interrogé sont exploités. Toutefois, ce qui est décrit dans ce cas simplifié, s'applique au cas où tous ou pratiquement tous les modes du groupe de modes interrogé sont exploités pour réaliser les mesures du rayon de courbure et de l'orientation du plan de courbure.

Dans ce mode de réalisation, le groupe de modes excité est le groupe du mode fondamental.

A cet effet, l'analyseur 42 comporte :
- une source optique 50,
- un démultiplexeur modal 52 optiquement raccordé, par l'intermédiaire d'un connecteur optique, à l'extrémité proximale de la fibre 14,
- un appareillage 54 d'acquisition optiquement raccordé au démultiplexeur modal 52,
- une unité électronique 56 de traitement électriquement raccordée à l'appareillage 54 pour recevoir des signaux électriques représentatifs des réponses spectrales acquises par l'appareillage 54, et
- une interface homme-machine 58, raccordée à l'unité 56, pour communiquer le résultat des mesures réalisées à un être humain.

Le démultiplexeur modal 52 comporte plusieurs ports d'entrée/sortie, chacun de ces ports d'entrée/sortie est associé à un seul mode respectif de la fibre 14. Lorsqu'un signal optique est reçu sur l'un de ces ports d'entrée/sortie, le démultiplexeur modal 52 transmet ce signal optique uniquement dans le mode de la fibre 14 associé à ce port d'entrée/sortie. Ainsi, le démultiplexeur 52 permet d'exciter un seul mode de la fibre 14 choisi parmi plusieurs modes possibles. A l'inverse, le démultiplexeur 52 permet aussi de diriger les signaux optiques qui se propagent simultanément dans plusieurs modes de la fibre 14, chacun vers le port d'entrée/sortie respectif associé à ce mode. Ainsi, le démultiplexeur modal 52 permet aussi de démultiplexer, c'est-à-dire de séparer, les différents signaux optiques qui se propagent simultanément dans des modes différents de la fibre 14.

Pour simplifier la figure 3, seuls trois ports d'entrée/sortie 61, 62a et 62b ont été représentés. Le port 61 est associé au mode fondamental. Les ports 62a et 62b sont associés à deux modes différents du même groupe de modes pair interrogé.

La source optique 50 émet un signal optique qui est utilisé pour exciter le mode fondamental de la fibre 14. A cet effet, la source optique 50 est optiquement raccordée directement au port 61 du démultiplexeur 52. Ici, la source optique 50 est une source large spectre, c'est-à-dire une source qui émet un signal optique dont le spectre de puissance recouvre simultanément la totalité de la plage de travail. Le signal optique émis n'est donc pas mono-fréquence. La majorité de la puissance du signal optique d'excitation et, typiquement, plus de 90 % ou 95 % de la puissance du signal optique d'excitation, se situe, dans le spectre de puissance de ce signal optique d'excitation, dans une plage continue de longueurs d'onde [λₘᵢₙ ; λₘₐₓ]. La longueur d'onde λₘᵢₙ est supérieure à la plus grande dimension latérale des motifs Mₚ des réseaux B₁ à B₄. Dans ce mode de réalisation, la longueur d'onde λₘᵢₙ est deux ou trois fois supérieure à la plus grande dimension latérale des motifs Mₚ des réseaux B₁ à B₄. Ici, la longueur d'onde λₘᵢₙ est supérieure à 1550 nm.

A ce sujet, il est souligné que des essais réalisés avec des réseaux de Bragg dont la plus grande dimension transversale était supérieure à la longueur d'onde λₘᵢₙ, ont montré que l'effet illustré sur les figures 4 et 5 ne se produit pas dans ces conditions..

L'appareillage 54 d'acquisition mesure les réponses spectrales dans le groupe de modes interrogé. Dans ce premier mode de réalisation, l'appareillage 54 mesure, les unes après les autres, les réponses spectrales dans chaque mode du groupe de modes interrogé. A cet effet, l'appareillage 54 comporte un commutateur optique 80 et un spectromètre monovoie 82.

Le commutateur 80 comporte deux ports d'entrée 86a et 86b et un port de sortie 88. Les ports 86a, 86b sont optiquement raccordés en permanence, respectivement, aux ports 62a et 62b du démultiplexeur 52. Le commutateur 80 comporte aussi un port 90 de commande électriquement raccordé à l'unité 56. En fonction de la commande reçue sur ce port 90, le commutateur 80 commute entre les états suivants :
- un premier état où il raccorde optiquement seulement le port 86a au port 88, et
- un deuxième état où il raccorde optiquement seulement le port 86b au port 88.

Le spectromètre 82 comporte un seul port de mesure 92 optiquement raccordé en permanence au port 88 du commutateur 80. Le spectromètre 82 comporte aussi un port de sortie 94 électriquement raccordé à l'unité 56. Le spectromètre 82 mesure la réponse spectrale du signal optique reçu sur son port de mesure 92 et délivre la réponse spectrale mesurée sur son port 94. Ici, le spectromètre 82 comporte une pluralité de photodétecteurs qui mesurent simultanément la puissance du signal optique reçu pour un grand nombre de longueurs d'ondes différentes. Par exemple, le spectromètre 82 est un spectromètre à barrette. Ainsi, selon l'état du commutateur 80, le spectromètre 82 délivre sur le port 94 soit la réponse spectrale mesurée du signal optique reçu sur le port 62a, soit la réponse spectrale du signal optique reçu sur le port 62b du démultiplexeur 52.

L'unité 56 est notamment configurée pour mettre en œuvre le procédé de la figure 8. Pour cela, en particulier, l'unité 56 est programmée pour :
- déterminer, pour chacun des réseaux Bᵢ, la variation ΔA_{i,j} de l'amplitude du pic principal dans la réponse spectrale de ce réseau Bᵢ dans le groupe j de modes interrogé, puis
- établir la valeur du rayon de courbure et la valeur de l'orientation du plan de courbure à partir des amplitudes ΔA_{i,j} déterminées.

Pour réaliser ces opérations, l'unité 56 comporte un microprocesseur programmable 100 et une mémoire 102 contenant les données et les instructions nécessaires pour exécuter le procédé de la figure 8. En particulier, la mémoire comporte tous les coefficients S_{k,i,j} de sensibilité qui relient une variation de la k-ième grandeur physique à une variation de l'amplitude ΔA_{i,j}, où :
- k est un indice qui identifie la grandeur physique,
- i est un indice qui identifie le réseau de Bragg utilisé pour mesurer la variation ΔA_{i,j}, et
- j est un indice qui identifie le groupe de modes interrogé.

Dans cet exemple, k est égale à 1 pour identifier le rayon de courbure et égal à 2 pour identifier l'orientation du plan de courbure.

Dans le cas du réseau B₁, la variation ΔA_{1,j} est indépendante ou pratiquement indépendante de l'orientation du plan de courbure car l'axe longitudinal du réseau B₁ est confondu avec l'axe central 20 de la fibre 14. Par conséquent, la variation ΔA_{1,j} est reliée à la valeur ΔR de la variation du rayon de courbure par la relation prédéterminée suivante : ΔA_{1,j} = f₁(ΔR), où f₁ est une fonction prédéterminée. Par exemple, la fonction f₁ est une fonction linéaire qui peut s'écrire sous la forme ΔA_{1,j} = S_{1,1,j} *ΔR, où S_{1,1,j} est le coefficient de sensibilité du réseau B₁ à la variation du rayon de courbure.

A l'inverse, dans le cas des réseaux B₂ à B₄, la variation ΔA_{i,j} dépend à la fois de la variation du rayon de courbure et de l'orientation du plan de courbure. Ainsi, dans le cas des réseaux B₂ à B₄, la variation ΔA_{i,j} est reliée à la variation du rayon de courbure et à l'orientation du plan de courbure par la relation prédéterminée suivante : ΔA_{i,j} = fᵢ(ΔR, ΔO), où :
- fᵢ est une fonction prédéterminée associée au réseau Bᵢ,
- ΔR est la variation du rayon de courbure, et
- ΔO est l'orientation du plan de courbure par rapport au plan P_{ref}.

A titre d'exemple, la fonction fᵢ peut être choisie linéaire. Dans ce cas, la relation ΔA_{i,j} = fᵢ(ΔR, ΔO) peut s'écrire sous la forme ΔA_{i,j} = S_{1,i,j}*ΔR + S_{2,i,j}*ΔO.

La relation ΔA_{1,j} = f₁(ΔR) et les trois relations ΔA_{i,j} = fᵢ(ΔR, ΔO) forment un système (1) d'équations qui peut être résolu pour établir la valeur ΔR de la variation du rayon de courbure et la valeur ΔO de l'orientation du plan de courbure à partir des amplitudes ΔA_{i,j} déterminées. Dans ce cas, le système (1) d'équations à résoudre comporte Nm équations et seulement deux inconnues. Un tel système d'équations peut être résolu à l'aide d'un algorithme qui minimise l'erreur tel que la méthode des moindres carrés.

Typiquement, les coefficients S_{k,i,j} sont déterminés de façon expérimentale en mettant en œuvre le procédé de la figure 8 pour des variations connues du rayon de courbure et pour différentes orientations connues du plan de courbure.

La mémoire 102 contient également, pour chaque réseau Bᵢ, l'amplitude de référence A_{i,j,ref} du pic principal de puissance de sa réponse spectrale dans le groupe j de modes interrogé. Typiquement, les amplitudes A_{i,j,ref} sont mesurées lorsque le rayon de courbure de la fibre 14 est nul.

La figure 8 représente un procédé de mesure du rayon de courbure et de l'orientation du plan de courbure à l'aide du dispositif 2.

Lors d'une phase 110 de calibration, les coefficients S_{k,i,j} et les amplitudes A_{i,j,ref} sont déterminés de façon expérimentale puis enregistrés dans la mémoire 102.

Ensuite, il est possible de procéder à une phase 112 de mesure du rayon de courbure et de l'orientation du plan de courbure. Pour cela, le procédé de mesure exploite le fait que même lorsqu'un seul groupe de modes de la fibre 14 est excité, après réflexion par chaque réseau Bᵢ, une réponse spectrale du réseau Bᵢ peut être mesurée dans d'autres groupes de modes de la fibre 14 que celui excité.

Ici, lors d'une étape 120, la source optique 50 excite un groupe de modes différent du ou des groupes de modes interrogés. Ici, le groupe de modes excité est le groupe fondamental. Pour cela, la source optique 50 émet un signal optique d'excitation dans la fibre 14. Par exemple, ce signal optique d'excitation est émis en continu. Ce signal optique d'excitation est transmis sur le port 61 du démultiplexeur 52. Le démultiplexeur 52 transmet ce signal optique d'excitation seulement dans le mode fondamental de la fibre 14. Le signal optique d'excitation se propage alors jusqu'aux réseaux Bᵢ et les réseaux Bᵢ réfléchissent seulement quelques longueurs d'onde de ce signal optique d'excitation dans chacun des groupes de modes. Le démultiplexeur 52 dirige alors les signaux optiques réfléchis dans chaque mode vers le port d'entrée/sortie associé à ce mode. Ainsi, les ports 62a et 62b délivrent les signaux optiques réfléchis par les réseaux Bᵢ, respectivement, dans deux modes distincts du groupe j de modes. C'est le spectre de puissance du signal optique réfléchi dans le groupe j de modes qui forme la réponse spectrale des réseaux Bᵢ dans ce groupe j de modes.

Les signaux optiques délivrés sur les ports 62a et 62b sont transmis, en continu, sur les ports, respectivement 86a et 86b, du commutateur 80.

Ensuite, en parallèle de l'étape 120, lors d'une étape 122, le commutateur 80 est commandé par l'unité 56 pour mesurer la réponse spectrale des réseaux Bᵢ dans un mode particulier du groupe j de modes. Par exemple, lors de la première itération de l'étape 122, l'unité 56 commande le commutateur 80 pour le placer dans son premier état où il raccorde optiquement le port 86a au port 88.

Ensuite, lors de l'étape 122, le spectromètre 82 mesure la réponse spectrale du signal optique émis sur le port 88 du commutateur 80. Ainsi, lors de la première itération de l'étape 122, l'appareillage 54 mesure la réponse spectrale des réseaux Bᵢ dans un premier mode du groupe j puis transmet cette première réponse spectrale mesurée à l'unité 56 qui l'acquière.

L'étape 122 est réitérée plusieurs fois. Lors de la seconde itération de l'étape 122, l'unité 56 commande le commutateur 80 pour le placer dans le deuxième état. Ainsi, après avoir réitéré l'étape 122 pour chaque mode pour lesquels une réponse spectrale doit être acquise, l'unité 56 a acquis chacune de ces réponses spectrales. Plus précisément, ici, l'unité 56 a acquis une première réponse spectrale dans un premier mode et une seconde réponse spectrale dans un second mode du groupe j de modes.

Une fois que l'unité 56 a acquis chacune des réponses spectrales à mesurer, lors d'une étape 130, l'unité 56 détermine les variations ΔA_{i,j}. Pour cela, dans ce mode de réalisation, l'unité 56 traite chacune des réponses spectrales acquises pour en extraire une amplitude A_{i,j,m} du pic principal pour chacun des réseaux Bᵢ, où l'indice m est une identifiant du mode du groupe j dans lequel la réponse spectrale traitée a été mesurée. Par la suite, m est égal à 1 pour désigner le premier mode du groupe j et m est égal à 2 pour désigner le second mode du groupe j. Dans une réponse spectrale mesurée, l'unité 56 distingue le pic principal d'un réseau Bᵢ par rapport aux pics principaux des autres réseaux de l'ensemble 16 en utilisant le fait que les réseaux de l'ensemble 16 ont des longueurs d'onde λ_{i,j} différentes et suffisamment éloignées les unes des autres pour pouvoir séparer les pics principaux des différents réseaux Bᵢ présents dans la même réponse spectrale mesurée. Ainsi, dans cet exemple de réalisation, lors de l'étape 130, l'unité 56 extrait quatre amplitudes A_{i,j,1} et quatre amplitudes A_{i,j,2} à partir des première et seconde réponses spectrales mesurées.

Les amplitudes A_{i,j,m} pour tous les modes du groupe j sont théoriquement identiques. Ainsi, dans ce mode de réalisation, pour améliorer la précision de la mesure, les amplitudes A_{i,j,m} extraites des réponses spectrales mesurées pour un même réseau Bᵢ sont moyennées. Par conséquent, dans cet exemple, l'amplitude A_{i,j} du pic principal de la réponse spectrale du réseau Bᵢ dans le groupe j de modes est prise égale à la moyenne arithmétique des amplitudes A_{i,j,1} et A_{i,j,2}.

Ensuite, toujours lors de l'étape 130, pour chaque réseau Bᵢ, l'unité 56 calcule l'écart entre les amplitudes A_{i,j} et A_{i,j,ref} pour obtenir la variation ΔA_{i,j}.

Une fois les variations ΔA_{i,j} déterminées, lors d'une étape 132, l'unité 56 établit les valeurs ΔR et ΔO des variations du rayon de courbure et de l'orientation du plan de courbure à partir des variations ΔA_{i,j} déterminées. Pour cela, lors de l'étape 132, l'unité 56 résout le système (1) d'équations.

Lors d'une étape 134, l'unité 56 commande l'interface 58 pour communiquer les valeurs établies à un être humain. La valeur mesurée du rayon de courbure peut être communiquée sous la forme de la valeur relative ΔR ou sous la forme d'une valeur absolue R_{ref} + ΔR, où R_{ref} est la valeur du rayon de courbure de la fibre 14 lorsque les amplitudes A_{i,j} sont égales, respectivement, aux amplitudes A_{i,j,ref}.

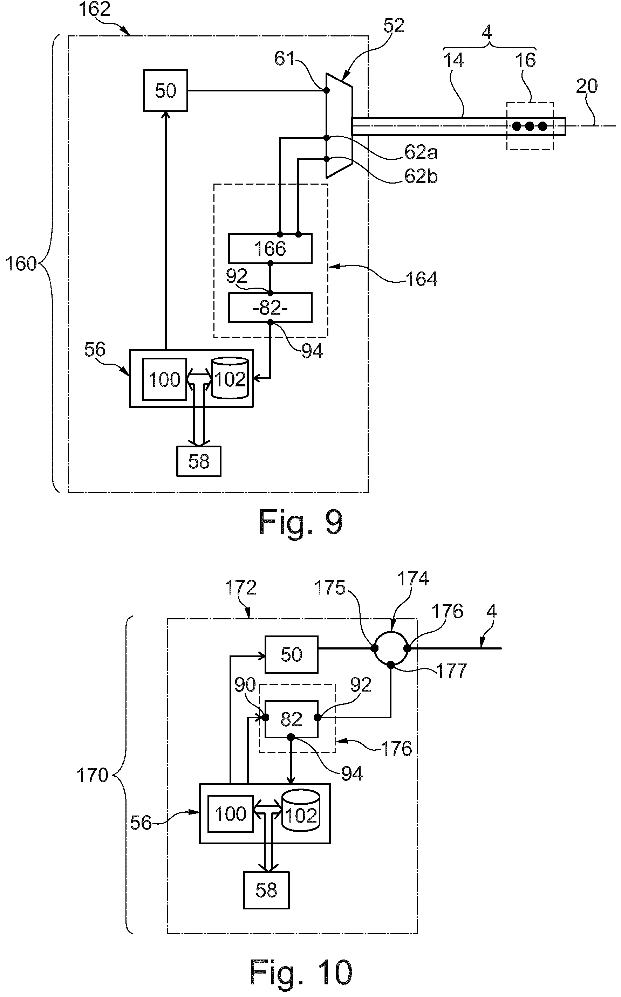

La figure 9 représente un dispositif 160 de mesure identique au dispositif 40 sauf que l'analyseur spectral 42 est remplacé par un analyseur spectral 162. L'analyseur spectral 162 est identique à l'analyseur spectral 42 sauf que l'appareillage 54 d'acquisition est remplacé par un appareillage 164 d'acquisition. L'appareillage 164 est identique à l'appareillage 54 sauf que le commutateur 80 est remplacé par un coupleur optique 166. Le coupleur optique 166 comporte deux entrées optiquement raccordées, respectivement, aux ports 62a et 62b du démultiplexeur 52. Le coupleur optique 166 comporte aussi une sortie optiquement raccordée au port 92 du spectromètre 82. Le coupleur 166 permet de raccorder simultanément les ports 62a et 62b au port 92 du spectromètre 82. Ainsi, le coupleur optique 166 délivre sur le port 92 un signal optique correspondant à la combinaison des signaux optiques délivrés sur les ports 62a et 62b. La réponse spectrale de ce signal optique combiné présente un rapport signal sur bruit amélioré par rapport à la réponse spectrale du signal délivré seulement sur le port 62a ou 62b.

Le fonctionnement du dispositif 160 est identique au fonctionnement du dispositif 40 sauf que :
- lors de l'étape 122 aucun commutateur, tel que le commutateur 80, n'est commandé, et
- lors de l'étape 130, pour chaque réseau Bᵢ, l'amplitude A_{i,j} est prise égale à l'amplitude du pic principal du réseau Bᵢ dans la réponse spectrale du signal optique combiné reçu sur le port 92 du spectromètre 82. En effet, dans ce mode de réalisation, une seule réponse spectrale est mesurée pour le groupe j de modes. Il n'est donc pas nécessaire de réitérer l'étape 122 pour plusieurs modes du groupe j.

La figure 10 représente un dispositif 170 de mesure identique au dispositif 40 sauf que le transducteur 4 est remplacé par un transducteur 4a et l'analyseur spectral 42 est remplacé par un analyseur spectral 172.

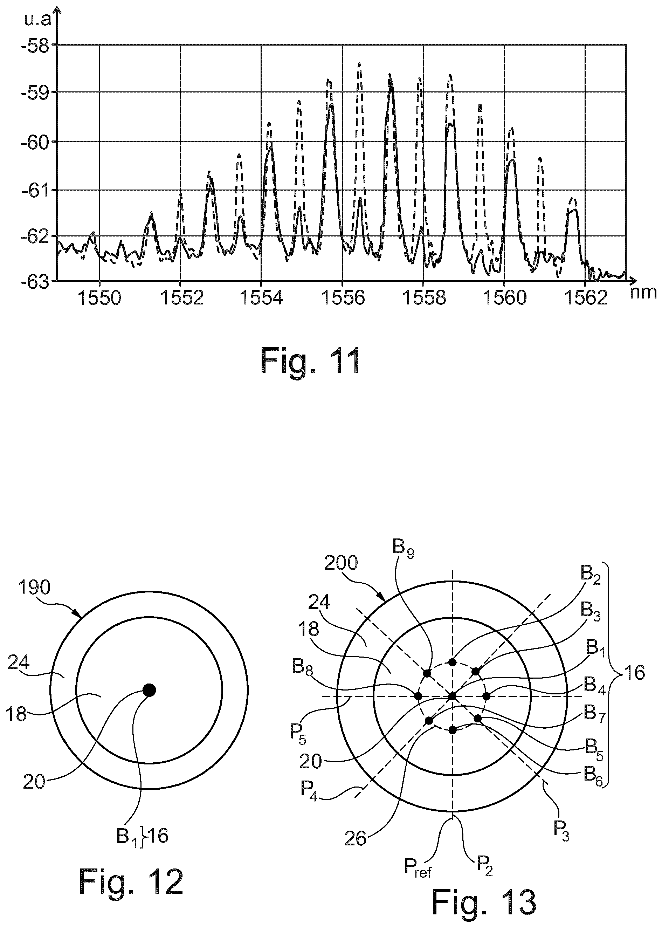

Le transducteur 4a est, par exemple, identique au transducteur 4 sauf que le pas Λᵢ de chaque réseau Bᵢ est choisi pour que toutes les longueurs d'onde λ_{i,j} auxquels un pic de puissance décelable se produit, soient comprises dans une plage de longueurs d'onde distincte de celle des autres réseaux de l'ensemble 16. Ainsi, les spectres de puissance, tels que celui représenté sur la figure 11, des différents réseaux Bᵢ ne se chevauchent pas.

L'analyseur spectral 172 est identique à l'analyseur spectral 42 sauf que :
- le démultiplexeur 52 est remplacé par un circulateur optique 174, et
- l'appareillage 54 d'acquisition est remplacé par un appareillage 176 d'acquisition.

Le circulateur optique 174 comporte :
- un port 175 optiquement raccordé à la source optique 50 pour recevoir le signal optique d'excitation,
- un port 176 optiquement raccordé directement à l'extrémité proximale de la fibre 14 du transducteur 4, et
- un port 177 optiquement raccordée à l'appareillage 176 d'acquisition.

Le circulateur 174 permet donc :
- de transmettre, seulement sur le port 176, le signal optique d'excitation émis par la source 50, et
- de transmettre, seulement sur le port 177, le signal optique réfléchi par les réseaux Bᵢ dans tous les groupes de modes de la fibre 14.

L'appareillage 176 est identique à l'appareillage 54 sauf que le commutateur 80 est omis. Ainsi, le port 177 du circulateur 174 est optiquement raccordé directement au port 92 de mesure du spectromètre 82.

Le fonctionnement du dispositif 170 est identique au fonctionnement du dispositif 40 sauf que :
- lors de l'étape 122, la commande du commutateur 80 est omise, et
- lors de l'étape 130 les traitements réalisés pour déterminer les variations ΔA_{i,j} sont différents car, pour chaque réseau Bᵢ, la réponse spectrale traitée comporte tous les pics principaux de tous les groupes de modes.

Le graphe de la figure 11 représente deux réponses spectrales du réseau B₁ mesurées par le spectromètre 82 du dispositif 170. La courbe en trait plein représente la réponse spectrale du réseau B₁ en absence de courbure de la fibre 14. La courbe en trait pointillé représente la réponse spectrale du réseau B₁ lorsque la fibre 14 est courbée. Sur ce graphe, l'axe des abscisses correspond à la longueur d'onde et l'axe des ordonnées représente la puissance du signal optique réfléchi par le réseau B₁. Comme visible sur ce graphe, l'amplitude des pics principaux situés aux emplacements des longueurs d'onde λ_{1,j} des groupes de modes pairs, varie de façon importante en réponse à une courbure de la fibre 14. Ces pics correspondent aux pics de puissance des réponses spectrales de ce réseau de Bragg dans les groupes pairs interrogés. A l'inverse, l'amplitude des pics principaux situés aux emplacements des longueurs d'onde λ_{1,j} des groupes de modes impairs, ne varie pratiquement pas en réponse à cette même courbure de la fibre 14. Ces pics correspondent aux pics de puissance des réponses spectrales de ce réseau de Bragg dans les groupes impairs interrogés.

Dès lors, lors de l'étape 130, pour chaque réseau Bᵢ, une variation ΔA_{i,j} est déterminée pour au moins un groupe de modes pair à partir de la réponse spectrale mesurée par le spectromètre 82. Ensuite, les étapes 132 et 134 sont identiques.

La figure 12 représente une section transversale d'un transducteur 190 susceptible d'être utilisé à la place du transducteur 4. Le transducteur 190 est identique au transducteur 4 sauf que l'ensemble 16 comporte seulement le réseau central B₁. Lorsque le transducteur 190 est utilisé à la place du transducteur 4, seule la valeur ΔR du rayon de courbure est établie lors de l'étape 132 car le réseau B₁ n'est pas ou pratiquement pas sensible à l'orientation du plan de courbure.

La figure 13 représente une coupe transversale d'un transducteur 200 susceptible d'être utilisé à la place du transducteur 4. Le transducteur 200 est identique au transducteur 4 sauf que l'ensemble 16 comporte huit réseaux excentrés B₂ à B₉. Ces réseaux excentrés sont construits et positionnés en appliquant l'enseignement donné dans le cas particulier du transducteur 4. En particulier, dans ce mode de réalisation, les axes A₂ à A₉ des réseaux B₂ à B₉ sont uniformément répartis sur la périphérie du cylindre 26 de révolution centré sur l'axe 20. Dans ce mode de réalisation, le nombre Nₚₛ est égal à quatre.

Lorsque le transducteur 200 est utilisé à la place du transducteur 4, le fonctionnement du dispositif de mesure découle de l'enseignement donné dans le cas particulier du transducteur 4. En particulier, le nombre de variations ΔA_{i,j} déterminées est plus important puisqu'il y a plus de réseaux excentrés dans le transducteur 200 que dans le transducteur 4.

### Chapitre III : Variantes :

### Variantes de l'ensemble de réseaux de Bragg :

Le motif Mₚ n'est pas nécessairement composé que d'une seule bulle. Par exemple, en variante, chaque motif Mₚ est formé de plusieurs bulles disposées les unes à côtés des autres dans un plan perpendiculaire à l'axe Aᵢ. Lorsque le motif Mₚ est formé de plusieurs bulles, ces bulles peuvent se chevaucher partiellement, par exemple, pour former des canaux. Il est aussi possible que ces bulles soient disjointes et ne se chevauchent pas. Dans un autre mode de réalisation, la bulle qui forme le motif Mₚ n'est pas sphérique mais plutôt aplatie pour s'étendre principalement dans un plan, par exemple, perpendiculaire à l'axe Aᵢ. En fait, il n'existe pas de contrainte particulière sur la forme d'un motif Mₚ à l'exception du fait que sa plus grande dimension doit être inférieure à λₘᵢₙ.

En variante, les réseaux Bᵢ de l'ensemble 16 peuvent différer les uns des autres par d'autres caractéristiques supplémentaires que leur pas Aᵢ. Par exemple, les réseaux Bᵢ ne comportent pas tous le même nombre n de motifs Mₚ et/ou les motifs Mₚ ne sont pas identiques dans chacun des réseaux Bᵢ.

Dans un autre mode de réalisation, le réseau de Bragg central est omis et l'ensemble 16 comporte seulement un ou plusieurs réseaux de Bragg excentrés. Si l'ensemble comporte seulement un réseau de Bragg excentré, alors le dispositif de mesure peut établir, de la même manière que ce qui a été décrit pour le réseau de Bragg central, la valeur du rayon de courbure à partir de cet unique réseau de Bragg excentré. Par contre, il n'est pas possible d'établir une valeur de l'orientation du plan de courbure. De plus, dans ce mode de réalisation très simplifié, la sensibilité du transducteur dépend de l'orientation du plan de courbure. Ainsi, ce mode de réalisation très simplifié est surtout utilisable dans des contextes où l'orientation du plan de courbure est constante.

Dans la plupart des cas pratiques, lorsque le réseau de Bragg central est omis, l'ensemble 16 comporte au moins deux réseaux de Bragg excentrés et, de préférence, au moins trois réseaux de Bragg excentrés, contenus dans des plans distincts. Dans ce cas, il est toujours possible d'établir simultanément une valeur pour le rayon de courbure et une valeur pour l'orientation du plan de courbure. Toutefois, dans une version simplifiée, seule la valeur de l'orientation du plan de courbure ou seule la valeur du rayon de courbure est établie.

L'ensemble 16 peut aussi contenir un nombre de réseaux de Bragg excentrés plus grand que dans les exemples précédemment décrits.

En variantes, les réseaux excentrés de l'ensemble 16 sont contenus dans seulement deux plans sécants ou, au contraire, dans plus de trois ou quatre plans sécants.

Les axes longitudinaux des réseaux de Bragg excentrés peuvent être répartis sur la périphérie de plusieurs cylindres de révolution concentriques. Dans ce cas, l'écart entre les rayons de deux cylindres de révolution consécutifs est supérieur à la plus grande dimension transversale des motifs Mₚ.

En variantes les axes longitudinaux des réseaux de Bragg excentrés disposés sur un même cylindre de révolution ne sont pas uniformément répartis autours de la périphérie de ce cylindre de révolution.

### Autres variantes du transducteur :

De nombreux modes de réalisation différents sont possibles pour la fibre 14. En fait, à partir du moment où la fibre optique permet la propagation d'au moins deux groupes de modes spatiaux différents, alors celle-ci peut être utilisée en tant que fibre optique multimode pour réaliser le transducteur 4. En particulier, il existe de nombreux profils différents de variation de l'indice de réfraction d'une fibre optique multimode dans une direction transversale. Par exemple, cette variation de l'indice de réfraction dans une direction transversale peut se faire par saut d'indice ou, au contraire, par une variation continue en suivant une fonction linéaire ou parabolique.

La fibre optique multimode peut être une fibre optique connue sous l'acronyme FMF (« Few Mode Fiber »), c'est-à-dire une fibre optique autorisant la propagation du signal optique selon moins de six ou trois groupes de modes différents.

En variante, la fibre 14 comporte plusieurs ensembles 16 de réseaux de Bragg réalisés les uns derrière les autres dans son cœur. Dans ce cas, les longueurs d'onde λ des réseaux de Bragg de chacun de ces ensembles sont différentes. Dans ces conditions, le même transducteur optique permet de mesurer le rayon de courbure et/ou l'orientation du plan de courbure à l'emplacement de chacun de ces ensembles de réseaux de Bragg en mettant en œuvre pour chacun de ces ensembles le même procédé de mesure que celui décrit en référence à la figure 8.

### Variantes de l'analyseur spectral:

La source optique n'est pas nécessairement une source large spectre. Par exemple, la source optique 50 peut être remplacée par une source laser accordable monochromatique qui émet un signal optique mono-fréquence à une longueur d'onde λₛ dans le domaine de l'optique. La valeur de la longueur d'onde λₛ dépend d'un signal de commande reçu sur un port de commande de la source laser. Une telle source laser est également appelée « source laser à balayage ». En effet, moyennant l'utilisation d'un signal de commande approprié, la longueur d'onde λₛ balaye toute la plage de travail. En balayant la plage de travail avec un telle source optique, il est aussi possible de mesurer les réponses spectrales des réseaux Bᵢ dans le ou les groupes de modes interrogés. Dans ce cas, le spectromètre 82 peut être simplifié car il n'est pas nécessaire qu'il soit capable de mesurer la puissance du signal optique reçu simultanément pour différentes longueurs d'onde.

La source optique n'est pas nécessairement une source laser. Par exemple, la source optique peut aussi être réalisée à l'aide d'une cavité de Fabry Pérot accordable. Dans ce cas, le signal de commande provoque le déplacement d'au moins un des dioptres de cette cavité de Fabry Pérot. Ce déplacement d'un dioptre provoque alors une modification de la fréquence de résonance propre de la cavité et donc une modification de la longueur d'onde λₛ.

La plage de travail peut être plus large que 100 nm. Par exemple, la largeur de cette plage de travail est, en variante, supérieure à 200 nm ou 300 nm. Il n'existe pas de limite supérieure pour la largeur de cette plage de travail si ce n'est qu'elle doit se situer dans le domaine de l'optique et qu'elle doit pouvoir être balayée par la source optique de l'analyseur spectral.

En variante, l'appareillage d'acquisition est optiquement raccordé à l'extrémité distale de la fibre 14. Dans ce cas, l'appareillage d'acquisition mesure les signaux optiques qui ont traversé le réseau 16. Dès lors, les réponses spectrales mesurées sont des spectres de puissance en transmission et non pas en réflexion. Toutefois, tout ce qui a été décrit dans le cas où ce sont les spectres de puissance en réflexion qui sont utilisés peut être transposé, sans difficulté particulière, au cas où ce sont des spectres de puissance en transmission qui sont utilisés.

L'interféromètre 82 peut être remplacé par un interféromètre multivoie qui est capable de mesurer simultanément les réponses spectrales des signaux optiques délivrés sur les ports 62a et 62b. Dans ce cas, il n'est pas nécessaire de réitérer l'étape 122 pour chaque mode interrogé.

### Variantes du procédé de mesure :

Le signal d'excitation peut aussi être émis dans un autre groupe impair de modes que le groupe fondamental

Lorsque le groupe impair excité comporte plusieurs modes, le signal optique d'excitation peut être transmis dans un ou plusieurs modes de ce groupe impair excité. Il est aussi possible d'exciter simultanément seulement plusieurs groupes de modes différents sans pourtant exciter tous les groupes de modes. Pour exciter simultanément plusieurs modes, un coupleur optique est utilisé pour transmettre simultanément le signal optique d'excitation sur les différents ports d'entrée/sortie du démultiplexeur 52 associées à ces modes.

Dans une variante simplifiée, même pour les groupes interrogés qui comportent plusieurs modes, une seule réponse spectrale dans un seul mode particulier de ce groupe de modes est mesurée. Dans ce cas, lors de l'étape 130 de détermination, la variation ΔA_{i,j} est égale à la variation ΔA_{i,j,m} déterminée à partir de la réponse spectrale mesurée pour ce seul mode m particulier.

En variante, plusieurs groupes de modes pairs sont interrogés. Dans ce cas, lors de l'étape 130, des variations ΔA_{i,j} sont déterminées pour différentes valeurs de l'indice j. Ensuite, lors de l'étape 132, les valeurs ΔR et ΔO des variations du rayon de courbure et de l'orientation du plan de courbure sont établies à partir de ces variations ΔA_{i,j} déterminées dans plusieurs groupes distincts de modes.

La détermination de l'amplitude A_{i,j} dans le groupe j comportant plusieurs modes peut être réalisée différemment. Par exemple, en variante, au lieu de moyenner les différentes amplitudes A_{i,j,m} déterminées, il est possible d'abord de moyenner les différentes réponses spectrales mesurées dans plusieurs modes du groupe j afin d'obtenir une réponse spectrale moyenne pour le groupe j. Ensuite, l'amplitude A_{i,j} est obtenue à partir de la réponse spectrale moyenne ainsi obtenue.

Pour augmenter la précision des mesures, il est possible de réitérer plusieurs fois la phase 112 de mesure puis de moyenner plusieurs valeurs ΔR et ΔO pour obtenir les valeurs finales, respectivement, de la variation du rayon de courbure et de l'orientation du plan de courbure.

Dans une variante simplifiée, l'unité 56 détermine seulement la variation du rayon de courbure et non pas sa valeur absolue. Dans ce cas, il n'est pas nécessaire de connaître la valeur de référence R_{ref} du rayon de courbure.

Plusieurs des variantes décrites ci-dessus peuvent être combinées dans un même mode de réalisation.

### Chapitre IV : Avantages des modes de réalisation décrits :

Le fait d'utiliser un réseau de Bragg dont la dimension transversale des motifs est inférieure à λₘᵢₙ permet de mesurer l'amplitude du pic principal dans le groupe de modes interrogé aussi bien à partir d'un spectre de puissance en réflexion qu'en transmission. De plus, à cause de cette caractéristique, le dispositif de mesure fonctionne avec tout type de fibres optiques multimodes et pas seulement avec des fibres FMF. Dès lors, le dispositif de mesure décrit dans ce texte est plus simple à mettre en œuvre que celui décrit dans l'article Zhao2018.

Le fait que le réseau B₁ soit centré sur l'axe central 20 de la fibre optique permet d'avoir une sensibilité de ce réseau B₁ aux variations du rayon de courbure identique dans tous les plans possibles de courbure et donc y compris entre des plans de courbure orthogonaux.

L'utilisation d'un ensemble de réseaux de Bragg excentrés contenus dans des plans sécants distincts permet en plus de mesurer l'orientation du plan de courbure.

Le fait que l'angle entre deux plans sécants successifs soit compris entre 0,9*360/(2*N)° et 1,1*360/(2*N)°, permet d'améliorer la précision du dispositif de mesure.

Le fait que les axes longitudinaux Aᵢ de tous les réseaux Bᵢ excentrés soient uniformément répartis sur la périphérie d'un ou plusieurs cylindres de révolution permet d'obtenir une sensibilité du transducteur à l'orientation du plan de courbure uniforme dans toutes les directions transversales.

Le fait d'utiliser au moins trois réseaux de Bragg excentrés dont les axes Aᵢ sont uniformément répartis sur la périphérie du même cylindre de révolution permet d'améliorer la précision de la mesure de l'orientation du plan de courbure.

Le fait de raccorder l'appareillage d'acquisition et la source optique à la même extrémité de la fibre optique permet de simplifier la mise en œuvre du dispositif de mesure.

## Revendications

1. Dispositif de mesure d'un rayon de courbure, ce dispositif comportant :
- un transducteur optique (4 ; 190 ; 200) comportant :
- une fibre optique multimode (14) contenant un cœur (18) qui s'étend le long d'un axe central (20) et à l'intérieur duquel un signal optique guidé par cette fibre optique multimode est apte à se propager selon plusieurs groupes de modes spatiaux différents, et
- un ensemble (16) d'un ou plusieurs réseaux de Bragg (Bᵢ), chaque réseau de Bragg de cet ensemble étant réalisé dans le cœur de la fibre optique et comportant au moins trois motifs (Mₚ) identiques alignés les uns derrières les autres le long d'un axe longitudinal parallèle à ou confondu avec l'axe central de la fibre optique,
- un analyseur spectral (42 ; 162 ; 172) configuré pour :
- émettre, dans la fibre optique multimode, un signal optique d'excitation dont la majorité de la puissance est comprise dans une plage de longueurs d'onde [λₘᵢₙ ; λₘₐₓ], et
- mesurer une réponse spectrale de l'ensemble (16) d'un ou plusieurs réseaux de Bragg en réponse au signal optique d'excitation émis, puis extraire de la réponse spectrale mesurée, pour chaque réseau de Bragg de l'ensemble (16), l'amplitude d'un pic de puissance correspondant au pic de puissance d'une réponse spectrale de ce réseau de Bragg dans un groupe de modes spatiaux interrogé différent du groupe du mode spatial fondamental, l'amplitude de ce pic de puissance variant en fonction du rayon de courbure de la fibre optique multimode à l'emplacement de ce réseau de Bragg, puis
- établir une valeur du rayon de courbure à partir de l'amplitude mesurée du pic de puissance,
**caractérisé en ce que**, pour chaque réseau de Bragg de l'ensemble (16), la plus grande dimension transversale des motifs de ce réseau de Bragg est inférieure à la longueur d'onde λₘᵢₙ.

2. Dispositif selon la revendication 1, dans lequel l'ensemble comporte un réseau de Bragg central (B₁) dont l'axe longitudinal est confondu avec l'axe central de la fibre optique et dont les motifs sont centrés sur l'axe central.

3. Dispositif selon la revendication 2, dans lequel l'ensemble (16) comporte seulement le réseau de Bragg central.

4. Dispositif selon l'une quelconque des revendications précédentes, dans lequel :
- l'ensemble comporte au moins deux réseaux de Bragg excentrés (B₂ à B₄ ; B₂ à B₉), chacun de ces réseaux de Bragg excentrés présentant les caractéristiques suivantes :
- son axe longitudinal est excentré par rapport à l'axe central de la fibre optique multimode, et
- le pas de ce réseau de Bragg est différent du pas des autres réseaux de Bragg de cet ensemble, le pas d'un réseau de Bragg étant la distance qui sépare les motifs de ce réseau de Bragg,
- les réseaux de Bragg excentrés de cet ensemble sont contenus dans des plans sécants (P₂ à P₄ ; P₂ à P₅), le plan qui contient un réseau de Bragg excentré étant le plan qui contient à la fois l'axe central (20) de la fibre optique multimode et l'axe longitudinal (Aᵢ) de ce réseau de Bragg excentré,
- tous les réseaux de Bragg de l'ensemble s'étendent de part et d'autre d'un même plan médian (Pₘ) perpendiculaire à l'axe central de la fibre optique multimode, et
- l'analyseur spectral (42 ; 162 ; 172) est configuré pour établir, en plus, une valeur de l'orientation du plan de courbure contenant le cercle osculateur pour lequel la valeur du rayon de courbure est établie.

5. Dispositif de mesure selon la revendication 4, dans lequel un angle, exprimé en degré, entre deux plans sécants consécutifs autour de l'axe central (20) est compris entre 0,9*360/(2*Nₚₛ) et 1,1*360/(2*Nₚₛ), où Nₚₛ est le nombre de plans sécants.

6. Dispositif de mesure selon la revendication 5, dans lequel les axes longitudinaux de tous les réseaux de Bragg excentrés sont uniformément répartis sur la périphérie d'un ou plusieurs cylindres de révolution (26) centrés sur l'axe central (20).

7. Dispositif de mesure selon la revendication 6, dans lequel l'ensemble (16) comporte au moins trois réseaux de Bragg excentrés dont les axes longitudinaux sont uniformément répartis sur la périphérie d'un même cylindre de révolution (26).

8. Dispositif selon l'une quelconque des revendications précédentes, dans lequel l'analyseur spectral (42 ; 162 ; 172) comporte :
- une source optique (50) apte à émettre, dans une extrémité de la fibre optique multimode, un signal optique d'excitation qui se propage dans au moins un groupe de modes spatiaux de la fibre optique multimode,
- un appareillage d'acquisition (54 ; 164 ; 176) apte à mesurer la réponse spectrale de l'ensemble (16) d'un ou plusieurs réseaux de Bragg en réponse au signal optique d'excitation émis, et
- une unité électronique (56) de traitement électriquement raccordée à l'appareillage d'acquisition, cette unité électronique de traitement étant configurée :
- pour extraire de la réponse spectrale mesurée, pour chaque réseau de Bragg, l'amplitude du pic de puissance de la réponse spectrale de ce réseau de Bragg dans le groupe de modes spatiaux interrogé, et
- pour établir la valeur du rayon de courbure à partir de l'amplitude mesurée du pic de puissance.

9. Dispositif de mesure selon la revendication 8, dans lequel :
- l'analyseur spectral (40 ; 160) comporte un démultiplexeur modal (52) optiquement raccordé à une extrémité de la fibre optique multimode, ce démultiplexeur modal étant apte à diriger seulement les signaux optiques qui se propagent dans le groupe de modes spatiaux interrogé vers un port d'entrée de l'appareillage d'acquisition, et
- l'appareillage d'acquisition (54 ; 164) est apte à mesurer, pour chaque réseau de Bragg de l'ensemble, l'amplitude du pic de puissance de la réponse spectrale de ce réseau de Bragg dans le groupe de modes spatiaux interrogé seulement à partir des signaux optiques dirigés vers son port d'entrée par le démultiplexeur modal.

10. Dispositif de mesure selon la revendication 8 ou 9, dans lequel l'appareillage d'acquisition (54 ; 164 ; 176) est optiquement raccordé à la même extrémité de la fibre optique multimode que celle à laquelle est raccordée la source optique (50).

11. Procédé de mesure d'un rayon de courbure à l'aide d'un dispositif de mesure conforme à l'une quelconque des revendications précédentes, ce procédé comportant les étapes suivantes :
- l'émission (120) dans la fibre optique multimode d'un signal optique d'excitation dont la majorité de la puissance est comprise dans une plage de longueurs d'onde [λₘᵢₙ ; λₘₐₓ], et
- la mesure d'une réponse spectrale de l'ensemble d'un ou plusieurs réseaux de Bragg en réponse au signal optique d'excitation émis, puis
- l'extraction (122), à partir de la réponse spectrale mesurée, pour chaque réseau de Bragg de l'ensemble, de l'amplitude d'un pic de puissance correspondant au pic de puissance d'une réponse spectrale de ce réseau de Bragg dans un groupe de modes spatiaux interrogé différent du groupe du mode spatial fondamental, l'amplitude de ce pic de puissance variant en fonction du rayon de courbure de la fibre optique multimode à l'emplacement de ce réseau de Bragg, puis
- l'établissement (132) d'une valeur du rayon de courbure à partir de l'amplitude mesurée du pic de puissance,
**caractérisé en ce que**, lors de l'étape (120) d'émission, la longueur d'onde λₘᵢₙ est supérieure à la plus grande dimension transversale des motifs de chaque réseau de Bragg de l'ensemble.

## Patentansprüche

1. Vorrichtung zur Messung eines Biegeradius, wobei diese Vorrichtung Folgendes aufweist:
- einen optischen Wandler (4; 190; 200) mit:
- einer Multimode-Lichtleitfaser (14), die einen Kern (18) enthält, der sich entlang einer Mittelachse (20) erstreckt und innerhalb dessen sich ein von dieser Multimode-Lichtleitfaser geführtes optisches Signal in mehreren unterschiedlichen Gruppen räumlicher Moden ausbreiten kann, und
- einer Anordnung (16) aus einem oder mehreren Bragg-Spiegeln (Bᵢ), wobei jeder Bragg-Spiegel dieser Anordnung im Kern der Lichtleitfaser ausgebildet ist und mindestens drei identische Muster (Mₚ) aufweist, die entlang einer Längsachse, die parallel zur Mittelachse der Lichtleitfaser verläuft oder mit dieser zusammenfällt, hintereinander aufgereiht sind,
- einen Spektralanalysator (42; 162; 172), der so ausgelegt ist, dass er:
- in der Multimode-Lichtleitfaser ein optisches Anregungssignal aussendet, dessen Leistung größtenteils in einem Wellenlängenbereich von [λₘᵢₙ; λₘₐₓ] liegt, und
- eine spektralen Antwort der Anordnung (16) aus einem oder mehreren Bragg-Spiegeln als Reaktion auf das ausgesendete optische Anregungssignal misst und anschließend aus der gemessenen spektralen Antwort für jeden Bragg-Spiegel der Anordnung (16) die Amplitude eines Leistungspeaks extrahiert, der dem Leistungspeak einer spektralen Antwort dieses Bragg-Spiegels in einer abgefragten Gruppe räumlicher Moden entspricht, die sich von der Gruppe des grundlegenden räumlichen Modus unterscheidet, wobei die Amplitude dieses Leistungspeaks in Abhängigkeit vom Biegeradius der Multimode-Lichtleitfaser an der Stelle dieses Bragg-Spiegels variiert, und anschließend
- einen Wert für den Biegeradius anhand der gemessenen Amplitude des Leistungspeaks bestimmt,
**dadurch gekennzeichnet, dass** für jeden Bragg-Spiegel der Anordnung (16) die größte Querabmessung der Muster dieses Bragg-Spiegels kleiner ist als die Wellenlänge λₘᵢₙ.

2. Vorrichtung nach Anspruch 1, wobei die Anordnung einen zentralen Bragg-Spiegel (B₁) aufweist, dessen Längsachse mit der Mittelachse der Lichtleitfaser zusammenfällt und dessen Muster auf der Mittelachse zentriert sind.

3. Vorrichtung nach Anspruch 2, wobei die Anordnung (16) lediglich den zentralen Bragg-Spiegel aufweist.

4. Vorrichtung nach einem der vorhergehenden Ansprüche, wobei:
- die Anordnung mindestens zwei exzentrische Bragg-Spiegel (B₂ bis B₄; B₂ bis B₉) aufweist, wobei jeder dieser exzentrischen Bragg-Spiegel folgende Eigenschaften aufweist:
- seine Längsachse ist exzentrisch zur Mittelachse der Multimode-Lichtleitfaser, und
- die Teilung dieses Bragg-Spiegels unterscheidet sich von der Teilung der anderen Bragg-Spiegel dieser Anordnung, wobei die Teilung eines Bragg-Spiegels der Abstand zwischen den Mustern dieses Bragg-Spiegels ist,
- die exzentrischen Bragg-Spiegel dieser Anordnung in sich schneidenden Ebenen (P₂ bis P₄; P₂ bis P₅) liegen, wobei die Ebene, die einen exzentrischen Bragg-Spiegel enthält, jene Ebene ist, die sowohl die Mittelachse (20) der Multimode-Lichtleitfaser als auch die Längsachse (Aᵢ) dieses exzentrischen Bragg-Spiegels enthält,
- alle Bragg-Spiegel der Anordnung sich beiderseits einer gemeinsamen Mittelebene (Pₘ) erstrecken, die senkrecht zur Mittelachse der Multimode-Lichtleitfaser verläuft, und
- der Spektralanalysator (42; 162; 172) so ausgelegt ist, dass er zusätzlich einen Wert für die Ausrichtung der Biegeebene ermittelt, die den Schmiegkreis enthält, für den der Wert des Biegeradius bestimmt wird.

5. Messvorrichtung nach Anspruch 4, wobei ein Winkel, ausgedrückt in Grad, zwischen zwei aufeinanderfolgenden sich schneidenden Ebenen um die Mittelachse (20) zwischen 0,9*360/(2*N_{PS}) und 1,1*360/(2*Nₚₛ) liegt, wobei N_{PS} die Anzahl der sich schneidenden Ebenen ist.

6. Messvorrichtung nach Anspruch 5, wobei die Längsachsen aller exzentrischen Bragg-Spiegel gleichmäßig über den Umfang eines oder mehrerer Rotationszylinder (26) verteilt sind, die auf der Mittelachse (20) zentriert sind.

7. Messvorrichtung nach Anspruch 6, wobei die Anordnung (16) mindestens drei exzentrische Bragg-Spiegel aufweist, deren Längsachsen gleichmäßig über den Umfang desselben Rotationszylinders (26) verteilt sind.

8. Vorrichtung nach einem der vorhergehenden Ansprüche, wobei der Spektralanalysator (42; 162; 172) Folgendes aufweist:
- eine optische Quelle (50), die in der Lage ist, an einem Ende der Multimode-Lichtleitfaser ein optisches Anregungssignal auszusenden, das sich in mindestens einer Gruppe räumlicher Moden der Multimode-Lichtleitfaser ausbreitet,
- eine Erfassungsvorrichtung (54; 164; 176), die in der Lage ist, die spektrale Reaktion der Anordnung (16) eines oder mehrerer Bragg-Spiegel als Reaktion auf das ausgesendete optische Anregungssignal zu messen, und
- eine elektronische Verarbeitungseinheit (56), die elektrisch mit der Erfassungsvorrichtung verbunden ist, wobei diese elektronische Verarbeitungseinheit ausgelegt ist, um:
- aus der gemessenen spektralen Antwort für jeden Bragg-Spiegel die Amplitude des Leistungspeaks der spektralen Antwort dieses Bragg-Spiegels in der abgefragten Gruppe räumlicher Moden zu extrahieren und
- den Wert des Biegeradius anhand der gemessenen Amplitude des Leistungspeaks zu bestimmen.

9. Messvorrichtung nach Anspruch 8, wobei:
- der Spektralanalysator (40; 160) einen Moden-Demultiplexer (52) aufweist, der optisch mit einem Ende der Multimode-Lichtleitfaser verbunden ist, wobei dieser Moden-Demultiplexer so ausgelegt ist, dass er nur die optischen Signale, die sich in der abgefragten Gruppe räumlicher Moden ausbreiten, zu einem Eingangsanschluss der Erfassungsvorrichtung leitet, und
- die Erfassungsvorrichtung (54; 164) in der Lage ist, für jeden Bragg-Spiegel der Anordnung die Amplitude des Leistungspeaks der spektralen Antwort dieses Bragg-Spiegels in der abgefragten Gruppe räumlicher Moden zu messen, und zwar ausschließlich anhand der optischen Signale, die vom Moden-Demultiplexer zu seinem Eingangsanschluss geleitet werden.

10. Messvorrichtung nach Anspruch 8 oder 9, wobei die Erfassungsvorrichtung (54; 164; 176) optisch mit demselben Ende der Multimode-Lichtleitfaser verbunden ist, mit dem die optische Quelle (50) verbunden ist.

11. Verfahren zur Messung eines Biegeradius mittels einer Messvorrichtung nach einem der vorhergehenden Ansprüche, wobei das Verfahren die folgenden Schritte aufweist:
- Aussenden (120) eines optischen Anregungssignal, dessen Leistung größtenteils in einem Wellenlängenbereich von [λₘᵢₙ; λₘₐₓ] liegt, in der Multimode-Lichtleitfaser und
- Messen einer spektralen Antwort der Anordnung von einem oder mehreren Bragg-Spiegeln als Reaktion auf das ausgesendete optische Anregungssignal, dann
- Extrahieren (122) der Amplitude eines Leistungspeaks aus der gemessenen spektralen Antwort für jeden Bragg-Spiegel der Anordnung, der dem Leistungspeak einer spektralen Antwort dieses Bragg-Spiegels in einer abgefragten Gruppe räumlicher Moden entspricht, die sich von der Gruppe des grundlegenden räumlichen Modus unterscheidet, wobei die Amplitude dieses Leistungspeaks in Abhängigkeit vom Biegeradius der Multimode-Lichtleitfaser an der Stelle dieses Bragg-Spiegels variiert, und anschließend
- Bestimmen (132) eines Werts für den Biegeradius anhand der gemessenen Amplitude des Leistungspeaks,
**dadurch gekennzeichnet, dass** im Schritt des Aussendens (120) die Wellenlänge λₘᵢₙ größer ist als die größte Querabmessung der Muster jedes Bragg-Spiegels der Anordnung ist.

## Claims

1. Device for measuring a radius of curvature, this device comprising:
- an optical transducer (4; 190; 200) comprising:
- a multi-mode optical fibre (14) containing a core (18) that extends along a central axis (20) and inside of which an optical signal guided by this multi-mode optical fibre is able to propagate in a plurality of different groups of spatial modes, and
- a set (16) of one or more Bragg gratings (Bᵢ), each Bragg grating of this set being produced in the core of the optical fibre and comprising at least three identical patterns (Mₚ) that are aligned one after another along a longitudinal axis parallel to or coincident with the central axis of the optical fibre,
- a spectral analyser (42; 162; 172) configured to:
- emit, into the multi-mode optical fibre, an optical excitation signal most of the power of which is contained in a wavelength range [λₘᵢₙ; λₘₐₓ], and
- measure a spectral response of the set (16) of one or more Bragg gratings in response to the emitted optical excitation signal, then extract from the measured spectral response, for each Bragg grating of the set (16), the amplitude of a power peak corresponding to the power peak of a spectral response of this Bragg grating in an interrogated group of spatial modes different from the group of the fundamental spatial mode, the amplitude of this power peak varying as a function of the radius of curvature of the multi-mode optical fibre in the location of this Bragg grating, then
- establish a value of the radius of curvature from the measured amplitude of the power peak,
**characterized in that**, for each Bragg grating of the set (16), the largest transverse dimension of the patterns of this Bragg grating is less than the wavelength λₘᵢₙ.

2. Device according to Claim 1, wherein the set comprises a central Bragg grating (B₁) the longitudinal axis of which coincides with the central axis of the optical fibre and the patterns of which are centred on the central axis.

3. Device according to Claim 2, wherein the set (16) comprises only the central Bragg grating.

4. Device according to any of the preceding claims, wherein:
- the set comprises at least two off-centre Bragg gratings (B₂ to B₄; B₂ to B₉), each of these off-centre Bragg gratings having the following characteristics:
- its longitudinal axis is off-centre with respect to the central axis of the multi-mode optical fibre, and
- the pitch of this Bragg grating is different from the pitch of the other Bragg gratings of this set, the pitch of a Bragg grating being the distance separating the patterns of this Bragg grating,
- the off-centre Bragg gratings of this set are contained in secant planes (P₂ to P₄; P₂ to P₅), the plane that contains an off-centre Bragg grating being the plane that contains both the central axis (20) of the multi-mode optical fibre and the longitudinal axis (Aᵢ) of this off-centre Bragg grating,
- all the Bragg gratings of the set extend on either side of the same median plane (Pₘ) perpendicular to the central axis of the multi-mode optical fibre, and
- the spectral analyser (42; 162; 172) is configured to establish, in addition, a value of the orientation of the plane of curvature containing the osculating circle for which the value of the radius of curvature is established.

5. Measuring device according to Claim 4, wherein an angle, expressed in degrees, between two consecutive secant planes around the central axis (20) is between 0.9*360/(2*Nₚₛ) and 1.1*360/(2*Nₚₛ), where Nₚₛ is the number of secant planes.

6. Measuring device according to Claim 5, wherein the longitudinal axes of all the off-centre Bragg gratings are uniformly distributed on the periphery of one or more cylinders of revolution (26) centred on the central axis (20).

7. Measuring device according to Claim 6, wherein the set (16) comprises at least three off-centre Bragg gratings, the longitudinal axes of which are uniformly distributed on the periphery of the same cylinder of revolution (26).

8. Device according to any of the preceding claims, wherein the spectral analyser (42; 162; 172) comprises:
- an optical source (50) able to emit, into one end of the multi-mode optical fibre, an optical excitation signal that propagates in at least one group of spatial modes of the multi-mode optical fibre,
- an acquiring apparatus (54; 164; 176) able to measure the spectral response of the set (16) of one or more Bragg gratings in response to the emitted optical excitation signal, and
- an electronic processing unit (56) electrically connected to the acquiring apparatus, this electronic processing unit being configured:
- to extract from the measured spectral response, for each Bragg grating, the amplitude of the power peak of the spectral response of this Bragg grating in the interrogated group of spatial modes, and
- to establish the value of the radius of curvature from the measured amplitude of the power peak.

9. Measuring device according to Claim 8, wherein:
- the spectral analyser (40; 160) comprises a mode demultiplexer (52) that is optically connected to one end of the multi-mode optical fibre, this mode demultiplexer being able to direct solely the optical signals propagating in the interrogated group of spatial modes to an input port of the acquiring apparatus, and
- the acquiring apparatus (54; 164) is able to measure, for each Bragg grating of the set, the amplitude of the power peak of the spectral response of this Bragg grating in the interrogated group of spatial modes solely on the basis of the optical signals directed to its input port by the mode demultiplexer.

10. Measuring device according to Claim 8 or 9, wherein the acquiring apparatus (54; 164; 176) is optically connected to the same end of the multi-mode optical fibre as the end to which the optical source (50) is connected.

11. Method for measuring a radius of curvature using a measuring device according to any of the preceding claims, this method comprising the following steps:
- emitting (120), into the multi-mode optical fibre, an optical excitation signal most of the power of which is contained in a wavelength range [λₘᵢₙ; λₘₐₓ], and
- measuring a spectral response of the set of one or more Bragg gratings in response to the emitted optical excitation signal, then
- extracting (122) from the measured spectral response, for each Bragg grating of the set, the amplitude of a power peak corresponding to the power peak of a spectral response of this Bragg grating in an interrogated group of spatial modes different from the group of the fundamental spatial mode, the amplitude of this power peak varying as a function of the radius of curvature of the multi-mode optical fibre in the location of this Bragg grating, then
- establishing (132) a value of the radius of curvature from the measured amplitude of the power peak,
**characterized in that**, in the emitting step (120), the wavelength λₘᵢₙ is greater than the largest transverse dimension of the patterns of each Bragg grating of the set.
